(19) Europäisches Patentamt
European Patent Office
Office européen des brevets

(11) **EP 1 565 883 B1**

(12) **EUROPEAN PATENT SPECIFICATION**

(45) Date of publication and mention
of the grant of the patent:
**29.10.2008 Bulletin 2008/44**

(51) Int Cl.:
***G06T 7/00*** *(2006.01)*

(21) Application number: **03748269.2**

(22) Date of filing: **18.09.2003**

(86) International application number:
**PCT/GB2003/004021**

(87) International publication number:
**WO 2004/051571 (17.06.2004 Gazette 2004/25)**

(54) **IMAGE FUSION WITH REGISTRATION CONFIDENCE MEASURE**

BILDFUSION MIT ZUVERLÄSSIGKEITSMASS DER REGISTRIERUNG

FUSION D'IMAGES AVEC MESURE DE CONFIANCE D'ENREGISTREMENT

(84) Designated Contracting States:
**DE FR GB**

(30) Priority: **29.11.2002 GB 0227887**

(43) Date of publication of application:
**24.08.2005 Bulletin 2005/34**

(73) Proprietor: **Mirada Solutions Limited
Oxford OX1 2EP (GB)**

(72) Inventors:
• **BEHRENBRUCH, Christian Peter
Oxford OX1 2ET (GB)**
• **DECLERCK, Jerome, Marie, Joseph
Oxford OX1 2ET (GB)**

(74) Representative: **Nicholls, Michael John
J.A. Kemp & Co.
14 South Square
Gray's Inn
London
WC1R 5JJ (GB)**

(56) References cited:
• **TANNER C ET AL: "Validation of volume-preserving non-rigid registration: application to contrast-enhanced MR-mammography" 2002, BERLIN, GERMANY, SPRINGER-VERLAG, GERMANY, [Online] September 2002 (2002-09), pages 307-314, XP002292465 ISBN: 3-540-44224-3 Retrieved from the Internet: URL: http://www.springerlink.com/media/M3T1 FWLTWJ6U4D2V9XAW/Contributions/0/1/F/ 4/01F 403A1UWE825VE.pdf> [retrieved on 2004-08-12]**
• **BLACKALL JM: "Respiratory Motion in Image-Guided Interventions of the Liver" PHD THESIS, [Online] September 2002 (2002-09), XP002292466 LONDON Retrieved from the Internet: URL:http: //www-ipg.umds.ac.uk/J.Blackall/j m_blackall_ thesis.pdf> [retrieved on 2004-08-12]**
• **FEDOROV D V ET AL: "Automatic registration and mosaicking system for remotely sensed imagery" PROC. SPIE - INT. SOC. OPT. ENG. (USA), PROCEEDINGS OF THE SPIE - THE INTERNATIONAL SOCIETY FOR OPTICAL ENGINEERING, 2003, SPIE-INT. SOC. OPT. ENG, USA, [Online] vol. 4885, September 2002 (2002-09), pages 444-451, XP002292578 ISSN: 0277-786X Retrieved from the Internet: URL:http: //scitation.aip.org/getpdf/servle t/ GetPDFServlet?filetype=pdf&id=PSISDG0048 85000001000444000001&idtype=cvips> [retrieved on 2004-08-16]**
• **WOODS R.P.: 'VALIDATION OF REGISTRATION ACCURACY' HANDBOOK OF MEDICAL IMAGING 2000, pages 491 - 497, XP001152021**

**Description**

The present invention relates to the registration of images, that is to say the process in which two different images are compared to find how they match each other, and are then displayed superimposed one on the other.

The registration of different images (also often called fusion of images) is useful in a variety of fields. The images being compared and superimposed could be images of the same object acquired using different modalities, which thus show up different features of interest. The fact that different features of interest are shown by the two modalities is useful in itself, but the usefulness can be enhanced by displaying the two images in superimposition. Examples of this technique might be the fusion of an infrared image with a visible light image, for instance in a surveillance, mapping or medical situation, or, particularly in the medical field, the combination of two different modality images such as magnetic resonance images, nuclear medicine images; x-ray images, ultrasound images etc. In general this fusion of different images assists the interpretation of the images.

In some situations the two images to be fused are taken at same time, or nearly the same time, but in other situations it is useful to fuse images taken at different times. For example, in the medical field it may be useful to fuse an image taken during one patient examination with an image taken in a different examination, for instance six months or a year spaced from the first one. This can assist in showing the changes in the patient's condition during that time. The fusion of time-separated images arises also in many other fields, such as surveillance and mapping.

A typical registration (or fusion) technique relies on identifying corresponding points in the two images and calculating a transformation which maps the pixels of one image to the pixels of another. This may use, for example, the well known block matching techniques in which pixels in a block in one image frame are compared with pixels in corresponding blocks in a search window in the other image frame and the transformation is calculated which minimises a similarity measure in the intensities in the blocks, such as the sum of square difference. Other techniques based on identification of corresponding shapes in the two images have also been proposed. Explanations of different registration techniques are found in, for example, US 5,672,877 (ADAC Laboratories), US 5,871,013 (Elscint Limited), and many other text books and published papers.

The article "Automatic Registration and Mosaicking System for Remotely Sensed Imagery "by Federov et al., Image and Signal Processing for Remote sensing VIII, Procs. SPIE, vol. 4885 (2003) discloses a method as defined in the precharacterizing portion of claim 1. The document "VALIDATION OF REGISTRATION ACCURACY" by R.P. WOODS discloses a method for validating image registration procedures using the calculation and display of local errors relative to a gold standard.

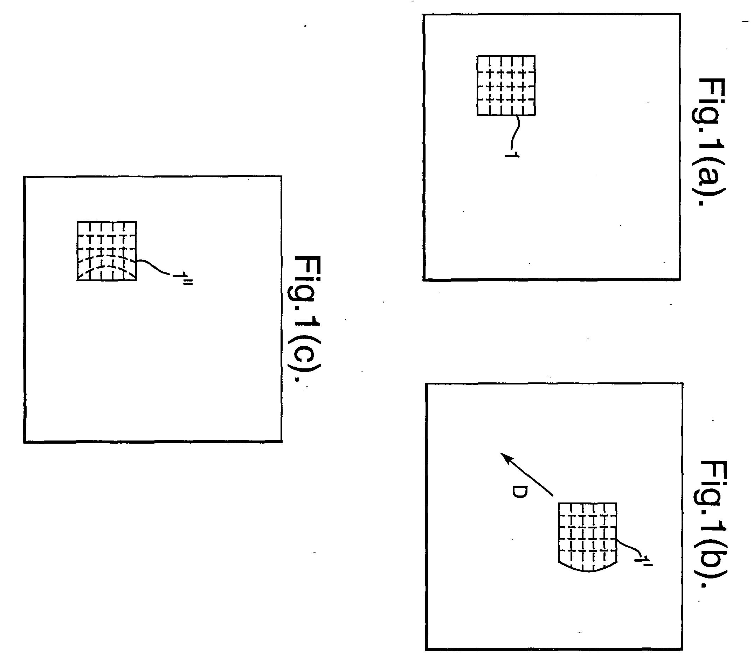

While such registration techniques are useful, the results can be regarded with suspicion by users. This is particularly true where the transformation which maps features in one image to features in the other involves not only a rigid movement, but also a non-rigid deformation of the image features. Users are typically prepared to accept the validity of a rigid movement, such as a translation and/or rotation, between two different images, but the validity of a shape deformation is much less clear. Figure 1 of the accompanying drawings illustrates schematically a typical situation. An image feature 1 in image frame (a) is found to match an image feature 1' in another image frame (b). To map the feature 1' to the original feature 1 it is necessary to perform a rigid displacement in the direction of arrow D in image (b), but it can be seen that there is also a shape change required because the right hand side of the object is stretched in image (b). Combining the rigid displacement and the deformation results in the fused image (c), but it can be seen that there is a resulting deformation field in the right hand part of the feature 1" in the fused image (c). Particularly in the medical field the concept of deformation like this is regarded with great scepticism by clinicians as they fear the consequences of an erroneous distortion: a stretched or shrunk functional image could lead the clinician to under- or over-estimate the extent of a diseased area, and lead to an inappropriate treatment with potentially dramatic consequences.

The present invention provides an image registration, or fusion, method in accordance with claim 1. Thus the confidence measure may represent only the magnitude of the local deformation. The measure can also be based on the local change of volume implied by the mapping transformation from one image to the other.

The measure may be selectively displayed in response to user input. It may be displayed as a visually distinguishable overlay on the display of the fused images. It may comprise a colour overlay with the colour or intensity (or both) indicating the measure of confidence, or the same could be achieved with a monochrome overlay whose grey, level represents the measure. Alternatively, a symbol, such as a circle, can be displayed at any selected point in the fused image, whose size and/or shape, for instance the diameter of the circle, is measure of the confidence in the registration. Clearly a number or another symbol could be chosen and another attribute, e.g. colour, rather than size, used to indicate the confidence measure. Preferably, to avoid cluttering the display, the symbol is only displayed at a single point selected by the user, for example by setting the cursor at that position, possibly in response to the user "clicking" at the selected point on the screen.

However the confidence measure is displayed, it need not be on the fused image, but can be next to it, or in a separate display window, or on a copy of the fused image. For example an error bar or number corresponding to the confidence measure at the cursor position would be displayed alongside the fused image.

The method is particularly applicable to fused medical images, though it is also applicable in other fields where images are registered, such as surveillance, mapping etc.

The invention may conveniently be embodied as a computer program comprising program code means for executing the method, and the invention extends to a storage or transmission medium encoding the program and to an image processing and display apparatus which performs the method.

The invention will be further described by way of example with reference to the accompanying drawings, in which:-

Figure 1 is a schematic diagram of an image registration or fusion process;
Figure 2 is a flow diagram of an embodiment of the invention;
Figure 3 illustrates an original MR image of the brain;
Figure 4 illustrates an original PET image of the brain;
Figure 5 illustrates the result of applying a non-rigid transformation to the PET image of Figure 4 so that it will register with the MR image of Figure 3;
Figure 6 illustrates the original MR image superimposed with the deformed PET image in registration with it;
Figure 7 illustrates the result of applying only a rigid transformation to the PET image of Figure 4 so that it will register with the MR image of Figure 3;
Figure 8 illustrates a display of a fused image in accordance with one embodiment of the invention; and
Figure 9 illustrates a display of a fused image in accordance with another embodiment of the invention.

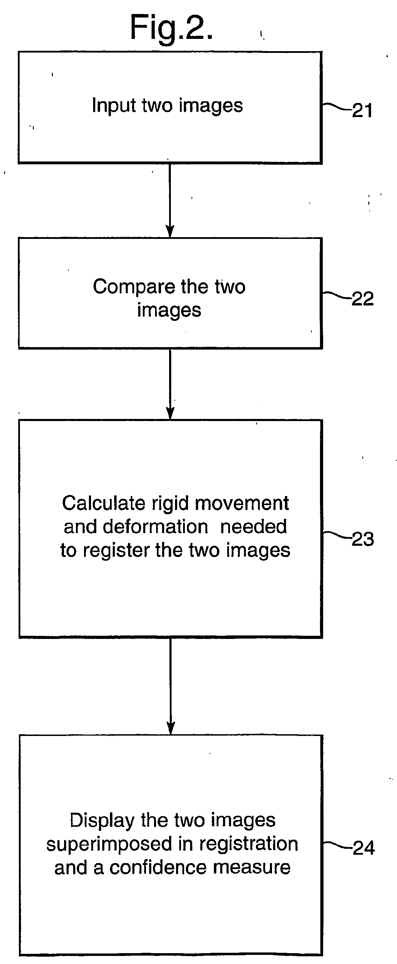

As indicated in Figure 2 a typical image fusion or registration process involves at step 21 the input of two images. These may be individual image frames in static imaging, or could be image sequences in a dynamic imaging application. The two images are compared in step 22 and the transformation which best maps features from one image onto corresponding features of the other is calculated. This transformation is, in essence, a mapping of pixels in one image to pixels in the other. Taking, as an example, a three dimensional image this may be expressed as :-

$$(x_1, y_1, z_1) = \mathbf{F}(x_2, y_2, z_2) \qquad (1)$$

where **F** represents the mapping transformation. Typically this transformation may include a rigid movement and a deformation viz:-

$$(x_1, y_1, z_1) = \mathbf{RIG}(x_2, y_2, z_2) + \mathbf{DEF}(x_2, y_2, z_2) \quad (2)$$

The rigid part of the movement may be a translation and a rotation, namely:-

$$(x_1 y_1, z_1) = \mathbf{TRANS}(x_2, y_2, z_2) + \mathbf{ROT}(x_2, y_2, z_2) + \mathbf{DEF}(x_2, y_2, z_2) \, (3)$$

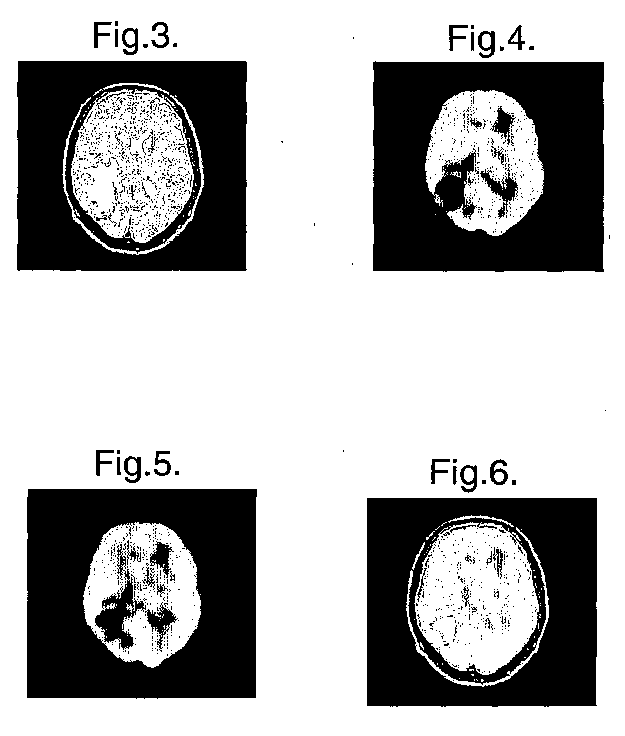

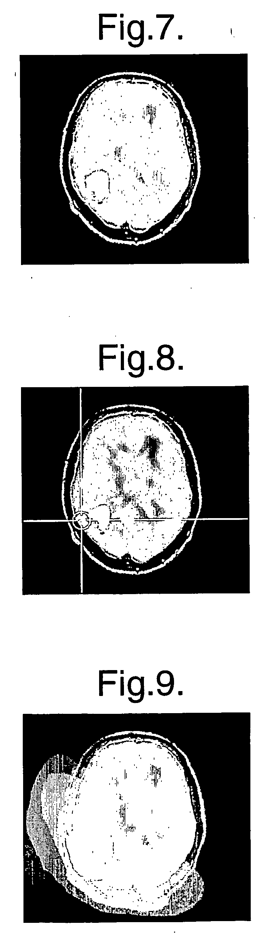

Figures 3, 4, 5 and 6 illustrate an example of this method applied to brain imaging. Figures 3 and 4 illustrate respectively the original MR and PET images of the brain. Figure 5 illustrates the result of applying a non-rigid transformation to the PET image of Figure 4 so that it will register with the MR image of Figure 3 and Figure 6 illustrates the original MR image superimposed with the deformed PET image in registration with it. The advantages of being able to see at a glance the information, from both imaging modalities are clear. By way of a comparison, Figure 7 illustrates the result of superimposing a version of the PET image of Figure 4 onto the MR image of Figure 3 with only a rigid deformation..

In accordance with this embodiment of the invention the size of the deformable part of the transformation **DEF** is regarded as a measure of the disagreement between the rigid registration (**RIG**) and the deformable registration (**RIG+DEF**). Thus a confidence measure $M$ is calculated from the deformable part of the transformation. As one example the confidence measure $M$ may be simply the magnitude (norm) of the local displacement. That is to say:-

$$M = \left| \mathbf{DEF}(x_2, y_2, z_2) \right| \tag{4}$$

Alternatively, the confidence measure may be calculated as the determinant of the local Jacobian of the transformation, which defines the local stretching (change of volume) at a particular location. So if:-

$$x_1 = F_x(x_2, y_2, z_2)$$
$$y_1 = F_y(x_2, y_2, z_2) \tag{5}$$
$$z_1 = F_z(x_2, y_2, z_2)$$

Then the measure $M$ becomes:-

$$M = \begin{vmatrix} \dfrac{dF_x}{dx} & \dfrac{dF_x}{dy} & \dfrac{dF_x}{dz} \\ \dfrac{dF_y}{dx} & \dfrac{dF_y}{dy} & \dfrac{dF_y}{dz} \\ \dfrac{dF_z}{dx} & \dfrac{dF_z}{dy} & \dfrac{dF_z}{dz} \end{vmatrix} \tag{6}$$

It is also possible to base the measure on the value of the similarity function such as cross-correlation, mutual information, correlation ratio or the like (see for example A. Roche, X. Pennec, G. Malandain, and N. Ayache. Rigid Registration of 3D Ultrasound with MR Images: a New Approach Combining Intensity and Gradient Information. IEEE Transactions on Medical Imaging, 20(10):1038--1049, October 2001) used in matching local blocks in the images, or to combine these various measure together to form a normalised estimate of the "confidence" in the registration process.

Once the measure has been calculated it can be displayed over the fused image. One way of displaying it is, in response to the user "clicking" at a certain point on the display, to display a circle whose diameter represents the value of the confidence measure. Figure 8 illustrates this applied to the fused image of Figure 6. The user can "point" to different positions on the image using the perpendicularly-intersecting cross-hairs (typically controlled by a pointing device such as a computer mouse), and "clicking" at the selected position causes a circle to be displayed as shown. The larger the circle the more non-rigid deformation has occurred and so the less agreement there is between the rigid and non-rigid registration. Thus the more careful the clinician should be while reviewing this fusion result. On the other hand, in areas where the circle has a small diameter, the registration has been basically a rigid movement, and thus the result of the fusion can be regarded as more reliable.

Figure 9 shows an alternative way of displaying the confidence measure on the fused image of Figure 6. In Figure 9 the overlay is a transparent colour wash (though shown in black and white in Figure 9) whose colour and intensity are directly related to the value of the confidence measure. For example, green of low intensity may be used where the confidence is high (i.e. the amount of non-rigid deformation is low) whereas red, growing more intense, can be used as the amount of non-rigid deformation increases. It can be seen that the confidence decreases towards the left of the image where a high non-rigid deformation was required to register the two images.

## Claims

1.    A method of displaying two images in registration with each other comprising the steps of comparing the two images to each other, calculating a transformation which maps features in one image to corresponding features in the other, and displaying the two images in superimposition based on the transformation, **characterized by**:

calculating from the degree of transformation required to perform said mapping, excluding rigid motions, a measure of the local confidence in the registration, and displaying said local confidence measure.

2. A method according to claim 1 wherein said measure of confidence is calculated from the degree of non-rigid deformation in said calculated transformation.

3. A method according to claim 1 or 2 wherein said measure of confidence is calculated from the magnitude of the local deformation in said transformation.

4. A method according to claim 1 or 2 wherein said measure of confidence is calculated from the local change of volume implied by the transformation.

5. A method according to any one of the preceding claims wherein the measure is selectively displayed in response to user input.

6. A method according to any one of the preceding claims wherein the confidence measure is displayed overlaid on the two images.

7. A method according to any one of the preceding claims wherein the measure is displayed as a visually distinguishable overlay on the two images, the visual properties of the overlay at any point being based on the said measure.

8. A method according to claim 7 wherein the colour of the visually distinguishable overlay is varied in dependence on said measure.

9. A method according to claim 7 or 8 wherein the intensity of the visually distinguishable overlay is varied in dependence on said measure.

10. A method according to claim 7 wherein the grey-level of the visually distinguishable overlay is varied in dependence on said measure.

11. A method according to claim 6 wherein the confidence measure is displayed next to the displayed superimposed images.

12. A method according to claim 6, 7 or 11 wherein the visually distinguishable overlay comprises a symbol having a property which depends on the value of said measure at a selected display point.

13. A method according to claim 12 wherein the symbol is one of a circle and an error bar whose size depends on the value of said measure at a selected display point.

14. A method according to claim 12 or 13 wherein the symbol is displayed at any time only at a single selected display point.

15. A method according to any one of the preceding claims wherein the images are medical images.

16. A computer program comprising program code means for executing on a programmed computer the method of any one of the preceding claims.

17. A computer-readable storage medium encoding a computer program in accordance with claim 16.

18. An image display apparatus comprising a display, and an image processor adapted to perform the method of any one of claims 1 to 15.

**Patentansprüche**

1. Methode zum Darstellen zweier Bilder in geometrischer Ausrichtung (Registrierung) miteinander, umfassend die Schritte des Vergleichens der beiden Bilder miteinander, Berechnens einer Transformation, die Merkmale in einem Bild den entsprechenden Merkmalen in dem anderen zuordnet, und Darstellens der beiden Bilder in auf der Transformation basierender Überlagerung, **gekennzeichnet durch**:

Errechnen aus dem Grad der Transformation, der zur Durchführung der Zuordnung, ausschließlich starrer Bewegungen, erforderlich ist, eines Maßes der lokalen Konfidenz der Registrierung, und Anzeigen des lokalen Konfidenzmaßes.

2. Methode nach Anspruch 1, wobei das Maß der Konfidenz aus dem Grad der nicht-starren Deformation in der errechneten Transformation berechnet wird.

3. Methode nach Anspruch 1 oder 2, wobei das Maß der Konfidenz aus der Größe der lokalen Deformation in der Transformation berechnet wird.

4. Methode nach Anspruch 1 oder 2, wobei das Maß der Konfidenz aus der lokalen Veränderung des Volumens, wie durch die Transformation impliziert, berechnet wird.

5. Methode nach einem der vorangehenden Ansprüche, wobei das Maß als Reaktion auf eine Anwender-Eingabe selektiv angezeigt wird.

6. Methode nach einem der vorangehenden Ansprüche, wobei das Konfidenzmaß überlagert auf den beiden Bildern angezeigt wird.

7. Methode nach einem der vorangehenden Ansprüche, wobei das Maß als eine visuell unterscheidbare Überlagerung auf den beiden Bildern angezeigt wird, wobei die visuellen Eigenschaften der Überlagerung an jedwelchem Punkt auf diesem Maß basieren.

8. Methode nach Anspruch 7, wobei die Farbe der visuell unterscheidbaren Überlagerung in Abhängigkeit von dem Maß variiert.

9. Methode nach Anspruch 7 oder 8, wobei die Intensität der visuell unterscheidbaren Überlagerung in Abhängigkeit von dem Maß variiert.

10. Methode nach Anspruch 7, wobei die Graustufe der visuell unterscheidbaren Überlagerung in Abhängigkeit von dem Maß variiert.

11. Methode nach Anspruch 6, wobei das Konfidenzmaß neben den dargestellten überlagerten Bildern angezeigt wird.

12. Methode nach Anspruch 6, 7 oder 11, wobei die visuell unterscheidbare Überlagerung ein Symbol mit einer Eigenschaft umfasst, die von dem Wert dieses Maßes an einem ausgewählten Darstellungspunkt abhängt.

13. Methode nach Anspruch 12, wobei das Symbol eines von einem Kreis und einem Fehlerbalken ist, dessen Größe von dem Wert dieses Maßes an einem ausgewählten Darstellungspunkt abhängt.

14. Methode nach Anspruch 12 oder 13, wobei das Symbol zu jeglichem Zeitpunkt lediglich an einem einzelnen ausgewählten Darstellungspunkt angezeigt wird.

15. Methode nach einem der vorangehenden Ansprüche, wobei die Bilder medizinische Bilder sind.

16. Computerprogramm, umfassend Programmcode-Mittel zum Durchführen auf einem programmierten Computer der Methode nach einem der vorangehenden Ansprüche.

17. Computerlesbares Speichermedium, codierend ein Computerprogramm gemäß Anspruch 16.

18. Bildanzeigegerät, umfassend einen Bildschirm und einen Bildprozessor, der daraufhin angepasst ist, die Methode nach einem der Ansprüche 1 bis 15 durchzuführen.

**Revendications**

1. Procédé d'affichage de deux images en enregistrement simultanément comportant les étapes consistant à comparer les deux images entre elles, calculer une transformation qui met en correspondance des caractéristiques d'une image avec des caractéristiques correspondantes de l'autre, et afficher les deux images en surimpression sur la base de la transformation, **caractérisé par** les étapes consistant à :

   calculer à partir du degré de transformation requis pour effectuer ladite mise en correspondance, à l'exclusion des déplacements rigides, une mesure de la confiance locale dans l'enregistrement, et afficher ladite mesure de confiance locale.

2. Procédé selon la revendication 1, dans lequel ladite mesure de confiance est calculée à partir du degré de déformation non-rigide de ladite transformation calculée.

3. Procédé selon la revendication 1 ou 2, dans lequel ladite mesure de confiance est calculée à partir de la grandeur de la déformation locale de ladite transformation.

4. Procédé selon la revendication 1 ou 2, dans lequel ladite mesure de confiance est calculée à partir du changement local de volume impliqué par la transformation.

5. Procédé selon l'une quelconque des revendications précédentes, dans lequel la mesure est affichée de manière sélective en réponse à une entrée de l'utilisateur.

6. Procédé selon l'une quelconque des revendications précédentes, dans lequel la mesure de confiance est affichée superposée sur les deux images.

7. Procédé selon l'une quelconque des revendications précédentes, dans lequel la mesure est affichée en tant que superposition pouvant être distinguée visuellement sur les deux images, les propriétés visuelles de la superposition à tout point quelconque étant basées sur ladite mesure.

8. Procédé selon la revendication 7, dans lequel la couleur de la superposition pouvant être distinguée visuellement varie en fonction de ladite mesure.

9. Procédé selon la revendication 7 ou 8, dans lequel l'intensité de la superposition pouvant être distinguée visuellement varie en fonction de ladite mesure.

10. Procédé selon la revendication 7, dans lequel le niveau de gris de la superposition pouvant être distinguée visuellement varie en fonction de ladite mesure.

11. Procédé selon la revendication 6, dans lequel la mesure de confiance est affichée à la suite des images superposées affichées.

12. Procédé selon la revendication 6, 7 ou 11 dans lequel la superposition pouvant être distinguée visuellement comporte un symbole ayant une propriété qui dépend de la valeur de ladite mesure à un point d'affichage sélectionné.

13. Procédé selon la revendication 12, dans lequel le symbole est l'un parmi un cercle et une barre d'erreur dont la taille dépend de la valeur de ladite mesure à un point d'affichage sélectionné.

14. Procédé selon la revendication 12 ou 13, dans lequel le symbole est affiché à tout moment uniquement à un point d'affichage sélectionné unique.

15. Procédé selon l'une quelconque des revendications précédentes, dans lequel les images sont des images médicales.

16. Programme informatique comportant des moyens de code de programme pour mettre en oeuvre sur un ordinateur programmé le procédé selon l'une quelconque des revendications précédentes.

17. Support de mémorisation lisible par ordinateur codant un programme informatique conformément à la revendication 16.

18. Dispositif d'affichage d'image comportant un afficheur, et un processeur d'image adapté pour mettre en oeuvre le procédé selon l'une quelconque des revendications 1 à 15.

## Fig.1(a).

## Fig.1(b).

## Fig.1(c).

# Fig.2.

Input two images — 21

Compare the two images — 22

Calculate rigid movement and deformation needed to register the two images — 23

Display the two images superimposed in registration and a confidence measure — 24

## Fig.3.

## Fig.4.

## Fig.5.

## Fig.6.

Fig.7.

Fig.8.

Fig.9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5672877 A

- US 5871013 A

**Non-patent literature cited in the description**

- **FEDEROV et al.** Automatic Registration and Mosaicking System for Remotely Sensed Imagery. *Image and Signal Processing for Remote sensing VIII, Procs. SPIE,* 2003, vol. 4885

- **R.P. WOODS.** *VALIDATION OF REGISTRATION ACCURACY*